# EUROPEAN PATENT APPLICATION

(11) **EP 2 242 257 A1**
(43) Date of publication of application: **20.10.2010**
(21) Application number: 09157948.2
(22) Date of filing: 15.04.2009
(51) Int. Cl.: H04N 5/44, H04N 5/14

(54) **Audio/video signal processor**

(71) Applicant: Himax Media Solutions, Inc., Sinshih Township, Tainan County 74445 (TW)
(72) Inventor: Wen, Shang-Chieh, 74148 Tainan County (TW)
(74) Representative: Becker Kurig Straus

(57) **Abstract**

An audio/video signal processor is provided and includes a first chip, a bus, and a second chip. The first chip receives at least one input signal with display and sound information through at least one I/O interface and converts the input signal to generate a converted signal. The bus is connected with the first chip. The second chip receives the converted signal through the bus and processes the converted signal to generate a display and sound signal for displaying and playing. The first chip and the second chip are packaged by the same packaging manner, such as quad flat package (QFP), with the second chip fabricated by a more advanced process than the first chip.

## Description

### BACKGROUND OF THE INVENTION

### Field of the Invention

The invention relates to an audio/video signal processor, and more particularly to an audio/video signal processor with dual chips

### Description of the Related Art

An audio/video playing device, such as a television or a computer, may display images and play sounds according to digital signals and analog signals received from an analog/digital tuner (or a hybrid tuner), and received from various interfaces such as a D-sub connector, a component input terminal, and a CVBS/S-Video input terminal. Thus, in the playing device, an audio/video signal processor for processing both digital and analog signals received from the analog/digital tuner (or a hybrid tuner), and received from various interfaces such as a D-sub connector, a component input terminal, and a CVBS/S-Video input terminal has to be fabricated by BGA (ball grid array) packaging for a large number of pins, however, which increases cost.

### BRIEF SUMMARY OF THE INVENTION

An exemplary embodiment of an audio/video signal processor comprises a first chip, a bus, and a second chip. The first chip receives at least one input signal with display and sound information through at least one I/O interface and converts the input signal to generate a converted signal. The bus is communicated with the first chip. The second chip receives the converted signal through the bus and processes the converted signal to generate a display and sound signal for displaying and playing. The first chip and the second chip are packaged by the same packaging manner with the second chip fabricated by a more advanced process than the first chip. In some embodiments, the packaging manner is quad flat package (QFP), and the second chip is fabricated by a 0.90nm process, and the first chip is fabricated by a 0.18um process.

In some embodiments, the second chip comprises a first processing module, a second processing module, a third processing module, and a memory. The first processing module processes the converted signal from the first chip to accordingly generate a processed video signal and a processed audio signal. The second processing module and the third processing module respectively process the processed audio signal and the processed video signal to generate a display and sound signal for displaying and playing. The memory is accessed by the first processing module and the third processing module.

In some embodiments, the first chip comprises a demodulating unit for receiving a digital signal to serve as the input signal and generating the converted signal to the second chip and a converting unit for receiving an analog input signal to serve as the input signal and generating the converted signal to the second chip. Further, the first chip comprises an interface controlling unit and a processing device, wherein the interface controlling unit controls the processing device to receives the converted signal from the demodulating unit through the bus, descramble and decrypt the converted signal from the demodulating unit, and transmits the converted signal which has been descrambled and decrypted signal to the second chip through the controlling unit.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

FIG. 1 is a schematic view showing an exemplary embodiment of an audio/video signal processor;

FIG. 2 shows the disposition of the interfaces of the audio/video signal processor in FIG. 1; and

FIG. 3 is a schematic view showing another exemplary embodiment of an audio/video signal processor.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

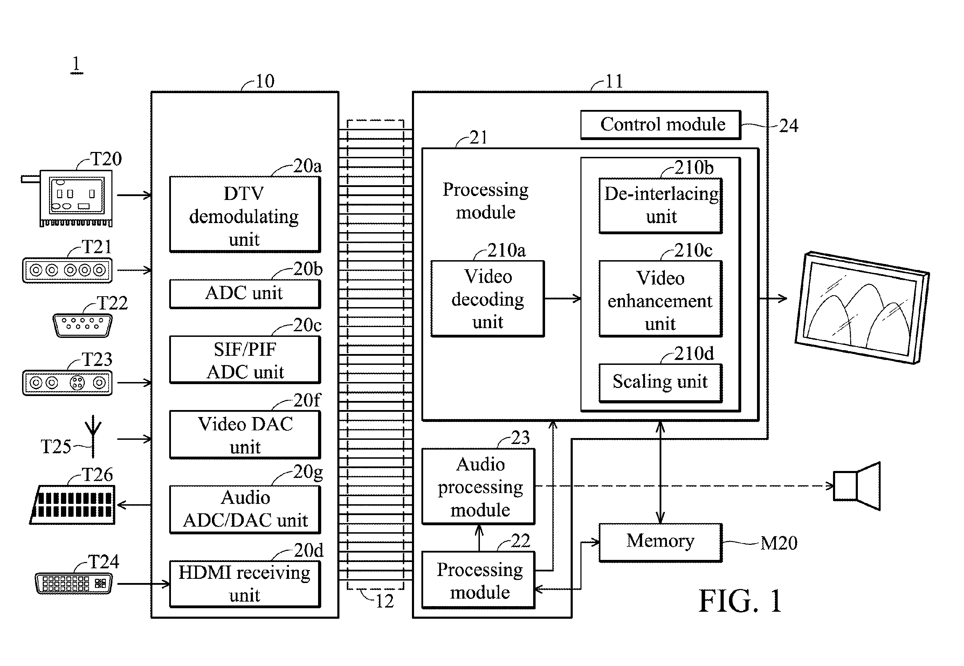

Audio/video signal processors are provided. In an exemplary embodiment of an audio/video signal processor in FIG. 1, an audio/video signal processor 1 comprises two chips 10 and 11 and a bus 12. The chip 10 is used to support analog part of the audio/video signal processor, including an audio/video signal transceiver, a video signal demodulator, an analog to digital converter, a digital to analog converter and the like. The chip 11 is used to support digital part of the audio/video signal processor, including a video decoder, an audio signal processor, a video signal processor and the like. Each of the chips 10 and 11 has a plurality of pins, and the chip 10 is connected to the chip 11 through the bus 12.

Referring to FIG. 1, the chip 10 comprises a digital television (DTV) demodulating unit 20a, an analog-to-digital converting (ADC) unit 20b, a SIF/PIF ADC unit 20c, an HDMI receiving unit 20d, a video digital-to-analog converting (DAC) unit 20f, and an audio ADC/DAC unit 20g. The chip 10 receives analog or digital signals with image and sound information from various input/output interfaces which comprise a hybrid tuner T20, a component input terminal T21, a D-sub connector T22, a CVBS/S-Video input terminal T23, an HDMI connector T24, and an antenna T25. The chip 10 can also output digital signals to a SCART-OUT terminal T26.

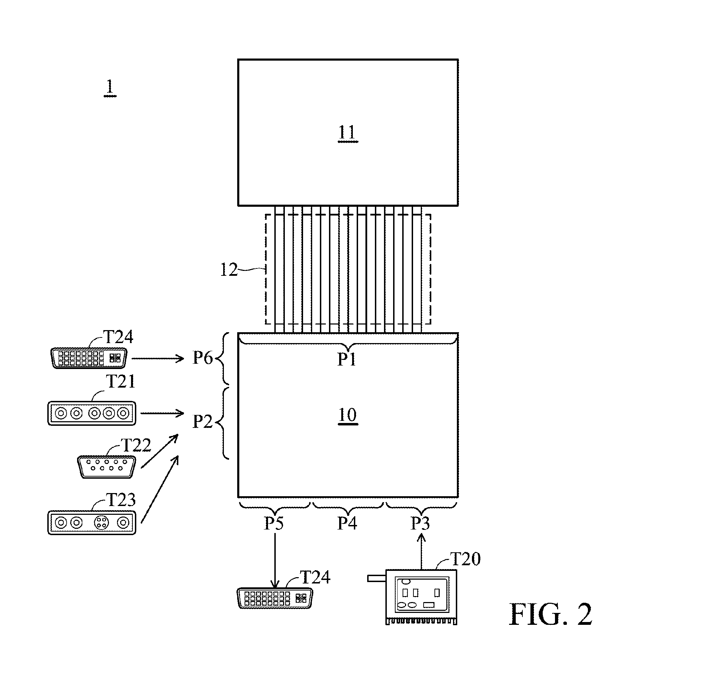

Referring to FIG. 2, a first portion P1 of the pins of the chip 10 is connected to the chip 11 through the bus 12. A second portion P2 of the pins of the chip 10 is arranged for the ADC unit 20b to be connected to the component input terminal T21, the D-sub connector T22, and the CVBS/S-Video input terminal T23. Additionally, a third portion P3 thereof is arranged for the SIF/PIF ADC unit 20c to be connected to the hybrid tuner T20, a fourth portion P4 thereof is arranged for the audio ADC/DAC unit 20g, a fifth portion P5 thereof is arranged for the video DAC unit 20f to be connected to the SCART-OUT terminal T26, and a sixth portion P6 thereof is arranged for the HDMI receiving unit 20d to be connected to the HDMI connector T24. The remaining pins of the chip 10 are arranged for applications according to system requirements. In the embodiments, the portions P1-P6 of the pins of the chip 10 are given as an example. In some embodiments, the position and arrangement of the pins of the chip 10 for connection with the chip 11, the hybrid tuner T20, the component input terminal T21, the D-sub connector T22, the CVBS/S-Video input terminal T23, the HDMI connector T24, and the SCART-OUT terminal T26 is determined according to circuitry design and system requirements.

Referring back to Fig. 1, in the chip 10, the ADC unit 20b receives an analog signal from analog input terminals, such as the component input terminal T21, the D-sub connector T22, or the CVBS/S-Video input terminal T23, and converts the analog signal to a digital signal to serve as a corresponding converted signal. The ADC unit 20b transmits the corresponding converted signal to the chip 11 through the bus 12. The SIF-PIF ADC unit 20c receives an analog signal from the hybrid tuner T20 and generates a digital signal to serve as a corresponding converted signal. The SIF-PIF ADC unit 20c transmits the corresponding converted signal to the chip 11 through the bus 12. The DTV demodulator 20a receives a digital signal from digital input terminals, such as the hybrid tuner T20 or the antenna T25, and generates transform streams to serve as a corresponding converted signal. Meanwhile, the DTV demodulator 20a transmits the converted signal to the chip 11 through the bus 12. In the embodiment, the hybrid tuner T20 can receive both analog and digital signals. In other embodiments, the ADC unit 20b can receive an analog signal from an exclusive analog tuner, while the DTV demodulator 20a can receive a digital signal from an exclusive digital tuner.

The chip 11 comprises processing modules 21 and 22 and an audio processing module 23. The processing module 21 comprises a video decoding unit 210a, a de-interlacing unit 210b, a video enhancement unit 210c, and a scaling unit 210d for processing video data of the converted signal from the chip 10. When the chip 11 receives the converted signal from the ADC unit 20b or the SIF-PIF ADC unit 20c, the video decoding unit 210a decodes the received converted signal and generates a video decoded signal. The de-interlacing unit 210b transforms an interlacing scan mode of the video decoded signal to a progressive scan mode, wherein the progressive scan mode is applied for a liquid crystal display (LCD) panel or a plasma display panel (PDP). The video enhancement unit 210c enhances the quality of images represented by the video decoded signals, for example, the video enhancement unit 210c reduces noise and enhances contrast of the images. The scaling unit 210d adjusts size or resolution of the images represented by the video decoded signal to display images on an external display panel according specification of the display panel or use's requirements. After the scan mode transformation, video enhancement, and size or resolution adjustment, the processing module 21 generates a display signal for the display panel. The audio processing module 23 also receives the converted signals from the ADC unit 20b or the SIF/PIF ADC unit 20c and demodulates/decodes audio data of the converted signals to generate audio decoded signals. The audio decoded signals are transmitted to an external speaker module.

When the chip 11 receives the converted signal from DTV modulating unit 20a or the HDMI receiving unit T24, the processing module 22 of the chip 11 processes video and audio data of the converted signal. The processing module 22 accordingly generates a processed video signal and transmits the processed video signal to the de-interlacing unit 210b, the video enhancement unit 210c, and the scaling unit 210d for adjusting quality of images represented by the processed video signal and changes feature values of the images represented by the processed video signal. The de-interlacing unit 210b transforms an interlacing scan mode of the processed video signal to a progressive scan mode. The video enhancement unit 210c enhances the quality of images represented by the processed video signal. The scaling unit 210d adjusts size or resolution of the images represented by the processed video signal to display images on the display panel according specification of the display panel or use's requirements. The processing module 22 generates a display signal for the display panel. The processing module 22 also generates a processed audio signal according to the received converted signals and transmits the processed audio signal to the audio processing module 23. The audio processing module 23 demodulates/decodes the processed audio signal to generate audio decoded signals, which are transmitted to the speaker module. In some embodiments, the processing module 22 comprises an MPEG-2 (Moving Picture Experts Group-2) decoding unit.

According to above disposition of the chips 10 and 11, the units for receiving/outputting signals from/to the I/O interfaces and the units for processing the video data and audio data are divided into the two chips 10 and 11. Thus, each of the chips 10 and 11 has a decreased number of pins. Both of the chips 10 and 11 can be packaged by a quad flat package (QFP) matter which has a lower cost. Moreover, since the processing modules 21 and 22 and the audio processing module 23 are arranged to process digital signal, the chip 11 can be fabricated by a smaller 90nm process. The chip 10 is fabricated by 0.18 um process.

Referring to FIG. 1, the chip 11 further comprises a control module 24. When the processing module 21 or 22 processes the received converted signal, the processing module 21 or 22 requests to access at least one memory, in the embodiment, a memory M20 is given as an example. The control module 24 determines which of the processing modules 21 and 22 has requested to access the memory M30. When the control module 24 determines that the processing module 21 has requested to access the memory M20, it switches the memory M20 to be accessed by the processing module 21. Similarly, when the control module 22 determines that the processing module 22 has requested to access the memory M20, it switches the memory M20 to be accessed by the processing module 22. Thus, the memory M20 is shared by the processing modules 21 and 22. The control module 24 can appropriately switch the memory M20 to one of the processing modules 21 and 22, which is required to access the memory M20. In the embodiment, the memory M20 can be implemented by a DDR-SDRAM.

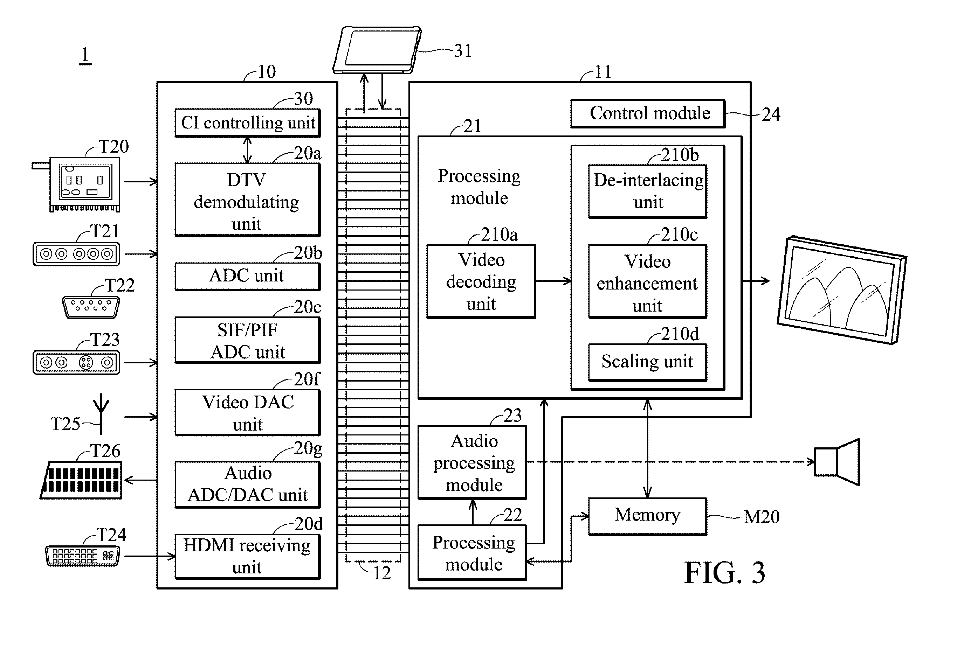

When the audio/video signal processor 1 is applied in European television systems, the chip 10 further comprises a common interface (CI) controlling unit 30, as shown in FIG. 3. The DTV demodulating unit 20a receives digital signals from digital input terminals, such as the hybrid tuner T20 or the antenna T25 and generates transform streams to serve as the corresponding converted signal. The DTV demodulating unit 20a transmits the converted signal to a processing device 31 through the first portion P1 of the pines of the bus 12. The processing device 31 descrambles and decrypts the converted signal and transmits the converted signal which has been descrambled and decrypted to the CI controlling unit 30 of the chip 10 in parallel. The CI controlling unit 30 then transmits the converted signal which has been descrambled and decrypted to the chip 11 through the first portion of the bus 12 in series. The processing module 22 of the chip 11 then performs the above operations to the converted signal from the processing device 31. In the embodiment, the processing device 31 is a personal computer memory card international association (PCMCIA) card.

Referring to FIGs. 1 and 2, the chip 10 comprises different I/O interfaces for receiving analog and digital signals and different units for transmitting the converted signals to the chip 11. Some units in the chip 10 can transmit the converted signals to the chip 11 through the same portion of the bus 12. For example, the ADC unit 20b and the HDMI receiving unit 20d share the same portion of the bus 12 to transmit the respective converted signals at different time. Thus, the size of the bus 12 communicated with the chips 10 and 11 is not required to be large. Moreover, the bus 12 can transmit the converted signals from the different units in the chip 10 at the same time, and the audio/video signal processor 1 thus can be applied for a display device having a picture in graphic (PIG) mode.

In some embodiments, the audio/video signal processor 1 can operate in a fast access mode. When the audio/video signal processor 1 begins operating, the units of the chip 10 may require data previously stored in the memory M20 for initiation. At this time, the audio/video signal processor 1 enters a fast access mode to transmit the data from the memory M20 to the chip 10 in parallel.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An audio/video signal processor comprising:
a first chip for receiving at least one input signal with display and sound information through at least one I/O interface and converting the input signal to generate a converted signal;
a bus for communicated with the first chip; and
a second chip for receiving the converted signal through the bus and processing the converted signal to generate a display and sound signal for displaying and playing;
wherein the first chip and the second chip are packaged by the same packaging manner, with the second chip fabricated by a more advanced process that the first chip.

2. The audio/video signal processor as claimed in claim 1, wherein the packaging manner is quad flat package (QFP), the second chip is fabricated by a 0.90nm process, and the first chip is fabricated by a 0.18um process.

3. The audio/video signal processor as claimed in claim 1, wherein the first chip comprises a demodulating unit for receiving a digital signal to serve as the input signal and generating the converted signal to the second chip and a converting unit for receiving an analog input signal to serve as the input signal and generating the converted signal to the second chip.

4. The audio/video signal processor as claimed in claim 3, wherein the first chip further comprises an interface controlling unit and a processing device connected to the bus, wherein the interface controlling unit controls the processing device to receive the converted signal from the demodulating unit through the bus, descramble and decrypt the converted signal from the demodulating unit, and transmits the converted signal which has been descrambled and decrypted signal to the second chip through the interface controlling unit.

5. The audio/video signal processor as claimed in claim 1, wherein the I/O interface comprises at least one of a tuner, a component input terminal, a D-sub connector, a CVBS/S-Video input terminal, a HDMI connector, or an antenna.

6. The audio/video signal processor as claimed in claim 1, wherein the first chip comprises a converting unit and an HDMI receiving unit, each receiving a analog input signal or a digital input signal to serve as the input signal and generating the converted signal to the second chip, and the converting unit and the HDMI receiving unit share the same portion of the bus to transmit the respective converted signals at different time.

7. The audio/video signal processor as claimed in claim 1, wherein the first chip comprises a converting unit and an HDMI receiving unit, each receiving a analog input signal or a digital signal to serve as the input signal and generating the converted signal to the second chip, and the converting unit and the HDMI receiving unit use different portions of the bus to transmit the respective converted signals at the same time.

8. The audio/video signal processor as claimed in claim 1, wherein the second chip comprises:
a first processing module for processing the converted signal to accordingly generate a processed video signal and a processed audio signal;
a second processing module for processing the processed audio signal of the converted signal; and
a third processing module for processing the processed video signal of the converted signal.

9. The audio/video signal processor as claimed in claim 8, wherein the second chip further comprises:
a memory for accessed by the first processing module and the third processing module; and
a control module for determining which of the first and third processing modules is requesting to access the memory and switching the memory to be accessed by the determined processing module.

10. The audio/video signal processor as claimed in claim 9, wherein the memory is implemented by a DDR SDRAM.

11. The audio/video signal processor as claimed in claim 9, wherein when the first chip requires data stored in the memory for operation, the audio/video signal processor enters a fast access mode to transmit the data from the memory to the first chip in parallel.

12. The audio/video signal processor as claimed in claim 8, wherein the third processing module comprises:
a video decoding unit for receiving to the converted signal and generating a decoded signal;
a de-interlacing unit for transforming an interlacing scan mode of the decoded signal to a progressive scan mode;
a video enhancement unit for enhancing the quality of images represented by the decoded signal; and
a scaling unit for adjusting size or resolution of the images represented by the decoded signal.

13. The audio/video signal processor as claimed in claim 8, wherein the first processing module comprises an MPEG-2 (Moving Picture Experts Group-2) decoding unit for decoding the converted signal and accessing the memory.

## Amended claims

### Amended claims in accordance with Rule 137(2) EPC.

**1.** An audio/video signal processor comprising:
a first chip (10) for receiving at least one input signal with display and sound information through at least one I/O interface and converting the input signal to generate a converted signal, wherein the first chip (10) comprises:
a demodulating unit (20a) for receiving a digital signal to serve as the input signal and generating transform streams to serve as the converted signal; and
a converting unit (20b) for receiving an analog input signal to serve as the input signal and generating a digital signal to serve as the converted signal;
a bus (12) for communicated with the first chip (10); and
a second chip (11) for receiving the converted signal through the bus (12) and processing the converted signal to generate a display and sound signal for displaying and playing;
wherein the first chip (10) and the second chip (11) are separately packaged by the same packaging manner, with the second chip (11) fabricated by a more advanced process that the first chip (10).

**2.** The audio/video signal processor as claimed in claim 1, wherein the packaging manner is quad flat package (QFP), the second chip (11) is fabricated by a 90nm process, and the first chip (10) is fabricated by a 0.18um process.

**3.** The audio/video signal processor as claimed in claim1, wherein the first chip (10) further comprises an interface controlling unit and a processing device (31) connected to the bus (12), wherein the interface controlling unit controls the processing device (31) to receive the converted signal from the demodulating unit through the bus (12), descramble and decrypt the converted signal from the demodulating unit, and transmits the converted signal which has been descrambled and decrypted signal to the second chip through the interface controlling unit.

**4.** The audio/video signal processor as claimed in claim 1, wherein the I/O interface comprises at least one of a tuner (T20), a component input terminal (T21), a D-sub connector (T22), a CVBS/S-Video input terminal (T23), a HDMI connector (T24), or an antenna (T25).

**5.** The audio/video signal processor as claimed in claim 1, wherein the first chip (10) comprises a converting unit and an HDMI receiving unit (20d), each receiving an analog input signal or a digital input signal to serve as the input signal and generating the converted signal to the second chip (11), and the converting unit and the HDMI receiving unit (20d) share the same portion of the bus (12) to transmit the respective converted signals at different time.

**6.** The audio/video signal processor as claimed in claim 1, wherein the first chip (10) comprises a converting unit and an HDMI receiving unit (20d), each receiving an analog input signal or a digital signal to serve as the input signal and generating the converted signal to the second chip (11), and the converting unit and the HDMI receiving unit (20d) use different portions of the bus (12) to transmit the respective converted signals at the same time.

**7.** The audio/video signal processor as claimed in claim 1, wherein the second chip (11) comprises:
a first processing module for processing the converted signal to accordingly generate a processed video signal and a processed audio signal;
a second processing module for processing the processed audio signal of the converted signal; and
a third processing module for processing the processed video signal of the converted signal.

**8.** The audio/video signal processor as claimed in claim 7, wherein the second chip (11) further comprises:
a memory for accessed by the first processing module and the third processing module; and
a control module for determining which of the first and third processing modules is requesting to access the memory and switching the memory to be accessed by the determined processing module.

**9.** The audio/video signal processor as claimed in claim 8, wherein the memory is implemented by a DDR SDRAM.

**10.** The audio/video signal processor as claimed in claim 8, wherein when the first chip (10) requires data stored in the memory for operation, the audio/video signal processor enters a fast access mode to transmit the data from the memory to the first chip (10) in parallel.

**11.** The audio/video signal processor as claimed in claim 8, wherein the third processing module comprises:
a video decoding unit (210a) for receiving to the converted signal and generating a decoded signal;
a de-interlacing unit (210b) for transforming an interlacing scan mode of the decoded signal to a progressive scan mode;
a video enhancement unit (210c) for enhancing the quality of images represented by the decoded signal; and
a scaling unit (210d) for adjusting size or resolution of the images represented by the decoded signal.

**12.** The audio/video signal processor as claimed in claim 7, wherein the first processing module comprises an MPEG-2 (Moving Picture Experts Group-2) decoding unit for decoding the converted signal and accessing the memory.
